(19) **Europäisches Patentamt European Patent Office Office européen des brevets**

(11) **EP 4 636 840 A1**

(12) **EUROPEAN PATENT APPLICATION**
published in accordance with Art. 153(4) EPC

(43) Date of publication:
22.10.2025   Bulletin 2025/43

(21) Application number: 23903752.6

(22) Date of filing: 02.11.2023

(51) International Patent Classification (IPC):
$H01M\ 4/133^{(2010.01)}$   $H01M\ 4/36^{(2006.01)}$
$H01M\ 4/587^{(2010.01)}$   $H01M\ 10/052^{(2010.01)}$
$C01B\ 32/20^{(2017.01)}$   $H01M\ 4/02^{(2006.01)}$

(52) Cooperative Patent Classification (CPC):
C01B 32/20; H01M 4/02; H01M 4/133; H01M 4/36;
H01M 4/587; H01M 10/052; Y02E 60/10

(86) International application number:
PCT/KR2023/017374

(87) International publication number:
WO 2024/128549 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.12.2022   KR 20220174979

(71) Applicant: Posco Future M Co., Ltd.
Pohang-si, Gyeongsangbuk-do 37918 (KR)

(72) Inventors:
• SHIN, Myoungsoo
  Pohang-si, Gyeongsangbuk-do 37918 (KR)
• LEE, Kyoungmuk
  Pohang-si, Gyeongsangbuk-do 37918 (KR)

• LEE, Se Hyun
  Pohang-si, Gyeongsangbuk-do 37918 (KR)
• MIN, Jin Wook
  Pohang-si, Gyeongsangbuk-do 37918 (KR)
• KWON, Haejun
  Pohang-si, Gyeongsangbuk-do 37918 (KR)
• LEE, Heon Young
  Pohang-si, Gyeongsangbuk-do 37918 (KR)
• KANG, Su Hee
  Pohang-si, Gyeongsangbuk-do 37918 (KR)
• JUNG, Su Yeon
  Pohang-si, Gyeongsangbuk-do 37918 (KR)
• KIM, Sumin
  Pohang-si, Gyeongsangbuk-do 37918 (KR)

(74) Representative: Meissner Bolte Partnerschaft
mbB
Patentanwälte Rechtsanwälte
Postfach 86 06 24
81633 München (DE)

(54) **ANODE FOR LITHIUM SECONDARY BATTERY, AND LITHIUM SECONDARY BATTERY COMPRISING SAME**

(57)   The present invention relates to a negative electrode for a lithium secondary battery, comprising: a current collector; and a negative electrode active material layer disposed on the current collector, wherein the negative electrode active material layer comprises a negative electrode active material, wherein the negative electrode active material comprises natural graphite and a coating layer disposed on a surface of the natural graphite, and wherein, at an electrode density in the range from 1.4 g/cc to 1.8 g/cc, a ratio of a change in adhesion strength (gf/mm) between the current collector and the negative electrode active material layer to a change in electrode density (g/cc) is 2 or more.

[Fig. 1]

Legend: Polymeric binder; Carbon Black; Solvent

Slurry-coated electrode → Electrode drying → Dried electrode (High Packing density) — Cu Foil

EP 4 636 840 A1

**Description**

**[Technical Field]**

The present invention relates to a negative electrode for a lithium secondary battery and a lithium secondary battery including the same, and more particularly, to a negative electrode for a lithium secondary battery with improved output and lifespan characteristics, and a lithium secondary battery including the same.

**[Background Art]**

As the development of and demand for mobile devices increases, the demand for secondary batteries as energy sources has been rapidly growing. Recently, the use of secondary batteries as power sources for electric vehicles (xEVs) and energy storage systems (ESSs) has been realized. Accordingly, extensive research is being conducted on secondary batteries that can meet various demands, and the demand for lithium secondary batteries with high output characteristics is increasing.

In particular, lithium secondary batteries used in electric vehicles and the like are required not only to have high energy density and the ability to deliver high output in a short time, but also to withstand harsh conditions involving repeated charge and discharge under high current in a short period of time for more than 10 years. Therefore, significantly superior output characteristics and long-term lifespan characteristics are essentially required compared to conventional small lithium secondary batteries.

**[Disclosure of Invention]**

**[Technical Problem]**

Accordingly, an aspect of the present invention is to provide a negative electrode for a lithium secondary battery with improved output and lifespan characteristics, and a lithium secondary battery including the same.

**[Technical Solution]**

According to an embodiment of the present invention, a negative electrode for a lithium secondary battery is provided, the negative electrode comprising: a current collector; and a negative electrode active material layer disposed on the current collector, wherein the negative electrode active material layer comprises a negative electrode active material, wherein the negative electrode active material comprises natural graphite and a coating layer disposed on a surface of the natural graphite, and wherein, at an electrode density in the range from 1.4 g/cc to 1.8 g/cc, a ratio of a change in adhesion strength (gf/mm) between the current collector and the negative electrode active material layer to a change in electrode density (g/cc) is 2 or more.

The negative electrode for a lithium secondary battery may satisfy the following Equation 1 at an electrode density in the range from 1.5 g/cc to 1.7 g/cc:

$$[\text{Equation 1}]$$

$$\text{Adhesion strength (gf/mm) / Electrode density (g/cc)} \geq 0.80$$

In Equation 1, the adhesion strength (gf/mm) refers to the adhesion strength between the current collector and the negative electrode active material layer.

The negative electrode for a lithium secondary battery may have an adhesion strength of 1.35 gf/mm or more between the current collector and the negative electrode active material layer at an electrode density of 1.6 g/cc.

The negative electrode for a lithium secondary battery may have an area ratio of orientation peak intensities $(I_{110}/I_{004})$ in an XRD pattern of 0.085 or more at an electrode density of 1.6 g/cc.

The sphericity of the negative electrode active material may be 0.90 or more.

The area ratio of orientation peak intensities $(I_{110}/I_{004})$ in an XRD pattern of the negative electrode active material may be 0.5 or more.

The tap density of the negative electrode active material may be 1.10 g/cc or more.

The specific surface area of the negative electrode active material may be 2.35 $m^2$/g or less.

The natural graphite may be reshaped natural graphite obtained through a primary spheroidization process and a secondary re-spheroidization process.

The coating layer may comprise a low-crystalline carbon material.

The low-crystalline carbon material may be one or more selected from petroleum-based pitch, coal-based pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

The content of the coating layer may be from 1 wt% to 20 wt% based on the total weight of the natural graphite.

The thickness of the coating layer may be from 5 nm to 20 nm.

According to another embodiment of the present invention, a lithium secondary battery comprising the aforementioned negative electrode for a lithium secondary battery is provided.

**[Advantageous Effects]**

The negative electrode for a lithium secondary battery according to an embodiment of the present invention can improve the output and lifespan characteristics of the battery by appropriately adjusting the ratio of the change in adhesion strength between the current collector and the negative electrode active material layer to the change in electrode density within a specific electrode density range.

**[Brief Description of the Drawings]**

FIG. 1 is a schematic view of a negative electrode for a lithium secondary battery according to one embodiment of the present invention.

FIG. 2 is a graph showing the measurement results of adhesion strength between the current collector and the negative electrode active material layer with respect to electrode density for the negative electrodes prepared according to Examples 1 and 2 and Comparative Examples 1 and 2.

FIG. 3 shows the results of high-rate performance evaluation tests of lithium secondary batteries prepared according to Examples 1 and 2 and Comparative Examples 1 and 2.

**[Mode for Carrying Out the Invention]**

The terms such as "first", "second", and "third" are used to describe various parts, components, regions, layers, and/or sections, but are not limited thereto. These terms are used merely to distinguish one part, component, region, layer, or section from another. Accordingly, a first part, component, region, layer, or section described hereinafter may be referred to as a second part, component, region, layer, or section without departing from the scope of the present invention.

Technical terms used herein are merely intended to describe specific embodiments and are not intended to limit the scope of the present invention. As used herein, the singular forms include plural referents unless the context clearly dictates otherwise. The term "comprise" or "comprising" as used in the specification specifies the presence of stated features, regions, integers, steps, operations, elements, and/or components, but does not preclude the presence or addition of one or more other features, regions, integers, steps, operations, elements, components, and/or groups thereof.

When a part is referred to as being "on" or "above" another part, it may be directly on or above the other part, or intervening parts may be present therebetween. In contrast, when a part is referred to as being "directly on" or "immediately above" another part, no intervening parts are present.

Unless otherwise defined, all technical and scientific terms used herein have the same meanings as commonly understood by one of ordinary skill in the art to which the invention belongs. Commonly used terms that are defined in standard dictionaries should be interpreted as having a meaning consistent with their meaning in the context of the relevant art and the present disclosure, and are not to be interpreted in an idealized or overly formal sense unless expressly so defined herein.

Unless otherwise specified, all percentages (%) are by weight, and 1 ppm means 0.0001 wt%.

As used herein, the expression "combinations thereof" in a Markush group format refers to one or more mixtures or combinations selected from the group consisting of the listed elements, and encompasses the presence of one or more elements selected from the group.

Hereinafter, embodiments of the present invention will be described in detail so that those skilled in the art may easily carry out the invention. However, the present invention may be embodied in many different forms and is not limited to the embodiments described herein.

**1. Negative Electrode for Lithium Secondary Battery**

The inventors of the present invention have conducted extensive research to improve the output and lifespan characteristics of batteries, and as a result, have discovered that such characteristics can be enhanced by sufficiently increasing the adhesion strength between the current collector and the negative electrode active material layer, and additionally, by appropriately adjusting various related physical properties. Furthermore, the inventors have found that the adhesion strength of the negative electrode and the various related physical properties can be readily derived by appropriately controlling the physical properties of the natural graphite-based negative electrode active material. Based on these findings, the present invention was completed.

Hereinafter, the adhesion strength between the current collector and the negative electrode active material layer, various related physical properties, and the physical properties of the negative electrode active material will be described in further detail.

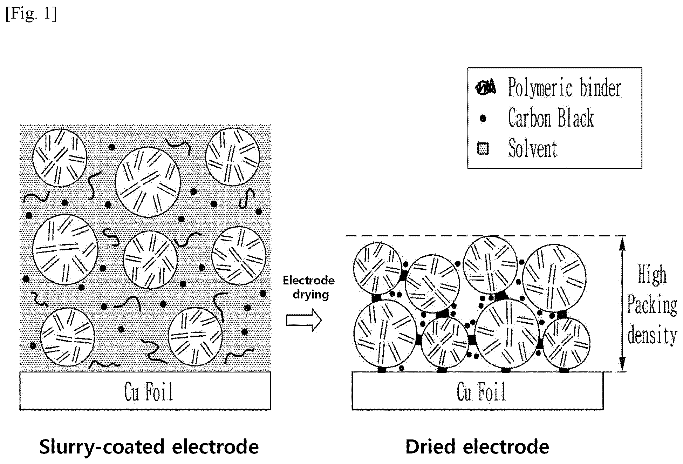

FIG. 1 is a schematic view of a negative electrode for a lithium secondary battery according to one embodiment of the present invention.

Referring to FIG. 1, one embodiment of the present invention provides a negative electrode for a lithium secondary battery, comprising: a current collector; and a negative electrode active material layer disposed on the current collector, wherein the negative electrode active material layer comprises a negative electrode active material, wherein the negative electrode active material comprises natural graphite and a coating layer disposed on a surface of the natural graphite, and wherein, at an electrode density in the range from 1.4 g/cc to 1.8 g/cc, a ratio of a change in adhesion strength (gf/mm) between the current collector and the negative electrode active material layer to a change in electrode density (g/cc) is 2 or more.

First, the negative electrode for a lithium secondary battery according to one embodiment of the present invention may have a ratio of the change in adhesion strength (gf/mm) between the current collector and the negative electrode active material layer to the change in electrode density (g/cc) (hereinafter referred to as the "rate of change ratio" in this specification) of 2 or more, and more specifically, 2.15 or 2.3 or more, and 3 or 2.8 or less.

The rate of change ratio may be expressed by the following equation:

*Rate of change ratio = [Adhesion strength at 1.8 g/cc - Adhesion strength at 1.4 g/cc] / (1.8 - 1.4)*

In general, as the electrode density of the negative electrode increases, the adhesion strength between the current collector and the negative electrode active material layer tends to increase. However, the rate of change ratio may vary depending on the type and other physical properties of the active material included in the negative electrode active material layer.

Through repeated studies, the inventors discovered that when natural graphite is used as the negative electrode active material, the output and lifespan characteristics of the battery can be significantly improved when the rate of change ratio is sufficiently large as described above. This is because, when a high-density re-spheroidization process is applied to conventional spheroidized graphite, the sphericity of the graphite improves, allowing for rolling at a high packing density during the electrode calendering process. When the packing density is high, the number of contact points between graphite particles or between the graphite and the current collector increases, which improves the electrode adhesion strength by the binder. As the sphericity increases, the powder particles are more tightly packed with increasing electrode density, resulting in an enhanced rate of change ratio. Ultimately, when the negative electrode has a high rate of change in adhesion strength, electrons transferred from the current collector are more efficiently conducted, thereby reducing electrode resistance and improving the output characteristics of the battery.

More specifically, if the rate of change ratio is too low, it means that even under external pressure, the change in adhesion strength between the current collector and the negative electrode active material layer is small. Due to the low packing density of the spheroidized graphite in the electrode, voids remain even after high-density rolling, and the contact area between particles is small, so the adhesion strength does not significantly improve despite applying high pressure. As a result, the negative electrode active material may easily delaminate from the current collector during battery life testing, which increases electron transfer resistance and leads to degradation in the output and lifespan characteristics of the battery.

On the other hand, if the rate of change ratio is too high, it indicates that the change in adhesion strength caused by electrode compression is excessive, potentially resulting in deformation of the active material with an increase in specific surface area. Consequently, the spherical morphology of the graphite may collapse, and cracks may form, leading to an increase in the solid electrolyte interphase (SEI) on the surface of the active material, which may cause a reduction in initial charge-discharge efficiency.

In this specification, the adhesion strength (gf/mm) between the current collector and the negative electrode active material layer under a compressed density in the range of 1.4 g/cc to 1.8 g/cc was measured by the following method.

First, the prepared negative electrode was cut to a size of 20 mm in width and 100 mm in length. Double-sided tape of 18 mm × 80 mm was attached to a slide glass measuring 25 mm × 100 mm. The prepared electrode was affixed on top of the double-sided tape and lightly pressed 10 times using a hand roller. Then, the specimen was mounted on a universal testing machine (UTM) equipped with a 1 kgf load cell, and the adhesion strength was measured by peeling the current collector at a 90° angle.

In addition, the negative electrode for a lithium secondary battery according to one embodiment of the present invention may satisfy the following Equation 1 at an electrode density in the range from 1.5 g/cc to 1.7 g/cc:

[Equation 1]

$$\text{Adhesion strength (gf/mm) / Electrode density (g/cc)} \geq 0.80$$

In Equation 1, the adhesion strength (gf/mm) refers to the adhesion strength between the current collector and the negative electrode active material layer.

More specifically, the value of the adhesion strength (gf/mm) divided by the electrode density (g/cc) may be 0.80 or more, and may be 1.2 or 1.1 or less.

If the value of adhesion strength (gf/mm) / electrode density (g/cc) is too small, it indicates that the adhesion strength is too low or the electrode density is too high. In such a case, the low number of contact points between the graphite particles with low sphericity or between the graphite and the current collector at a given electrode density may result in poor adhesion strength, which interferes with electronic conductivity between active materials, ultimately degrading the output and lifespan characteristics of the battery. In addition, an excessively high electrode density may indicate that there is insufficient space for the electrolyte to infiltrate between the graphite particles, leading to non-uniform wetting of the graphite surface by the electrolyte, restricting lithium ion mobility, and thereby deteriorating battery performance.

On the other hand, if the value of adhesion strength (gf/mm) / electrode density (g/cc) is too large, it may indicate that the adhesion strength is excessively high or the electrode density is too low. In such a case, deformation of the originally ellipsoidal shape of the spheroidized graphite particles may occur, resulting in destruction of the spherical morphology and formation of cracks. This, in turn, may increase the formation of a solid electrolyte interphase (SEI) layer on the surface of the active material, which may lower the initial charge-discharge efficiency. Moreover, too low an electrode density may lead to a reduction in the energy density of the battery.

In one embodiment, the negative electrode for a lithium secondary battery may have an adhesion strength (gf/mm) / electrode density (g/cc) value in the range of 0.65 to 0.70 at an electrode density of 1.4 g/cc.

In one embodiment, the negative electrode for a lithium secondary battery may have an adhesion strength (gf/mm) / electrode density (g/cc) value in the range of 0.75 to 0.83 at an electrode density of 1.5 g/cc.

In one embodiment, the negative electrode for a lithium secondary battery may have an adhesion strength (gf/mm) / electrode density (g/cc) value in the range of 0.85 to 0.93 at an electrode density of 1.6 g/cc.

In one embodiment, the negative electrode for a lithium secondary battery may have an adhesion strength (gf/mm) / electrode density (g/cc) value in the range of 0.94 to 1.04 at an electrode density of 1.7 g/cc.

In one embodiment, the negative electrode for a lithium secondary battery may have an adhesion strength (gf/mm) / electrode density (g/cc) value in the range of 1.05 to 1.2 at an electrode density of 1.8 g/cc.

In addition, the negative electrode for a lithium secondary battery according to one embodiment of the present invention may have an adhesion strength of 1.35 gf/mm or more between the current collector and the negative electrode active material layer at an electrode density of 1.6 g/cc, and more specifically, from 1.35 to 1.60 gf/mm or from 1.40 to 1.55 gf/mm.

If the adhesion strength between the current collector and the negative electrode active material layer is too low, it indicates insufficient binding force between the current collector and the negative electrode active material layer and between active material particles. This may result in the negative electrode active material easily delaminating from the current collector during battery life testing, causing separation of the active material, current concentration, increased resistance, and eventually deterioration in the output and lifespan characteristics of the battery. On the other hand, if the adhesion strength is too high, the binder may be non-uniformly distributed toward the current collector side, resulting in non-ideal adhesion and increased electrode resistance. Ultimately, the concentration of binder near the current collector may lead to decreased electrical conductivity and degraded output and lifespan characteristics. Furthermore, at a specific electrode density, a rapid increase in the specific surface area of the active material may increase the adhesion strength, which can lead to an increase in solid electrolyte interphase (SEI) formation on the surface of the active material, causing a reduction in initial charge-discharge efficiency.

In one embodiment, the negative electrode for a lithium secondary battery may have an adhesion strength between the current collector and the negative electrode active material layer in the range of 0.90 to 1.02 gf/mm or 0.92 to 1.00 gf/mm at an electrode density of 1.4 g/cc.

In one embodiment, the negative electrode for a lithium secondary battery may have an adhesion strength between the current collector and the negative electrode active material layer in the range of 1.15 to 1.30 gf/mm or 1.18 to 1.25 gf/mm at an electrode density of 1.5 g/cc.

In one embodiment, the negative electrode for a lithium secondary battery may have an adhesion strength between the current collector and the negative electrode active material layer in the range of 1.35 to 1.60 gf/mm or 1.40 to 1.55 gf/mm at an electrode density of 1.6 g/cc.

In one embodiment, the negative electrode for a lithium secondary battery may have an adhesion strength between the current collector and the negative electrode active material layer in the range of 1.60 to 1.85 gf/mm or 1.64 to 1.80 gf/mm at an electrode density of 1.7 g/cc.

In one embodiment, the negative electrode for a lithium secondary battery may have an adhesion strength between the current collector and the negative electrode active material layer in the range of 1.80 to 2.15 gf/mm or 1.85 to 2.10 gf/mm at an electrode density of 1.8 g/cc.

In addition, the negative electrode for a lithium secondary battery may have an area ratio of orientation peak intensities ($I_{110}/I_{004}$) in an XRD pattern of 0.085 or more at an electrode density of 1.6 g/cc, and more specifically, may be 0.085 or 0.10 or more, and 0.15 or 0.13 or less.

If the area ratio of orientation peak intensities ($I_{110}/I_{004}$) in the XRD pattern is too low, the orientation of the graphite edge surfaces becomes limited, which may hinder lithium insertion and extraction, reduce adhesion strength and the aforementioned rate of change ratio, and ultimately degrade the output characteristics. On the other hand, if the area ratio ($I_{110}/I_{004}$) is too high, although output performance may improve, production yield may decrease due to reduced processability, and an increase in solid electrolyte interphase (SEI) formation on the edge surfaces of the natural graphite layers may lead to reduced initial charge-discharge efficiency.

In the present specification, the area ratio of orientation peak intensities ($I_{110}/I_{004}$) refers to a value obtained by dividing the peak area of the (110) plane by that of the (004) plane after measuring the negative electrode using X-ray diffraction (XRD). Specifically, the (110) peak is measured in the range of $2\theta = 76.5°$ to $78.5°$, and the (004) peak is measured in the range of $2\theta = 53.5°$ to $56.0°$, where $2\theta$ represents the diffraction angle. This orientation peak area ratio serves as an indicator of the degree to which the edge portions of the natural graphite layers are oriented in multiple directions.

Hereinafter, the physical properties of the negative electrode active material will be described.

The sphericity of the natural graphite may be 0.90 or more, and more specifically, may range from 0.90 to 0.96, or from 0.91 to 0.95.

In the present specification, the term "sphericity" refers to a numerical value representing how closely a particle resembles a sphere, and is defined as the ratio of the perimeter of a circle having the same area as the two-dimensional projection of the particle to the actual perimeter of the particle projection. The sphericity may be measured using an optical image acquisition analyzer (Fluid Imaging Technologies, Flowcam 8100) and analysis software (Visual Spreadsheet).

If the sphericity of the natural graphite is too low, the coating uniformity during negative electrode active material preparation may deteriorate. In the manufacture of the negative electrode, low packing density and a small number of contact points may lead to reduced adhesion strength between the negative electrode active material layer and the current collector, as well as a decrease in the aforementioned rate of change ratio. This may require an increased amount of binder in the electrode composition or may degrade the electrochemical performance of the battery, such as output and swelling characteristics.

On the other hand, if the sphericity of the natural graphite is too high, productivity may be reduced due to increased processing time and decreased production yield. In addition, the improvement in electrochemical performance may be insignificant relative to the increased processing cost required to enhance sphericity, thereby lowering economic efficiency.

Accordingly, the sphericity of the negative electrode active material may be 0.90 or more, and more specifically, may range from 0.90 to 0.96, or from 0.91 to 0.95.

The area ratio of orientation peak intensities ($I_{110}/I_{004}$) in the XRD pattern of the negative electrode active material may be 0.5 or more, and more specifically, may be 0.5 or 0.6 or more, and 0.9 or 0.85 or less.

In the present specification, the area ratio of orientation peak intensities ($I_{110}/I_{004}$) refers to a value obtained by dividing the peak area of the (110) plane by that of the (004) plane after measuring the (110) and (004) planes of the negative electrode active material particles using X-ray diffraction (XRD). Specifically, the (110) peak is measured in the range of $2\theta = 76.5°$ to $78.5°$, and the (004) peak is measured in the range of $2\theta = 53.5°$ to $56.0°$, where $2\theta$ represents the diffraction angle. This orientation peak area ratio can be used as an indicator of the degree to which the edge portions of natural graphite layers are oriented in multiple directions.

If the area ratio of orientation peak intensities ($I_{110}/I_{004}$) in the XRD pattern of the negative electrode active material is too low, it may indicate a decrease in the sphericity of the graphite particles and the multidirectional orientation of the crystal planes, which may lead to reduced adhesion strength between the negative electrode active material layer and the current collector, as well as a decrease in the aforementioned rate of change ratio. As a result, a higher binder content may be required during electrode fabrication, or the electrochemical properties of the battery-such as output and swelling behavior-may deteriorate.

On the other hand, if the area ratio ($I_{110}/I_{004}$) is too high, productivity may decrease due to increased processing time and reduced yield. Furthermore, the improvement in electrochemical properties of the battery may be minimal relative to the increased processing cost required to enhance orientation, thereby lowering overall economic efficiency.

The tap density of the negative electrode active material may be 1.10 g/cc or more, and more specifically, may range from 1.10 to 1.30 g/cc, or from 1.16 to 1.24 g/cc.

In the present specification, the term "tap density" refers to a commonly used method in the art for measuring the packing level of a sample per unit volume. For example, the tap density may be measured in accordance with the instrument and method specified in ASTM B527, by mechanically tapping a measuring container filled with the sample from a fixed height for a specified number of drops, and calculating the resulting density as the ratio of the sample weight to the final volume.

If the tap density of the negative electrode active material is too low, the packing density during the electrode calendering process may be insufficient. As a result, the contact area between the negative electrode active material particles and the current collector may be reduced, which can lead to decreased adhesion strength between the current collector and the negative electrode active material layer, as well as a reduction in the aforementioned rate of change ratio. This may ultimately degrade the output and lifespan characteristics of the battery.

On the other hand, if the tap density of the negative electrode active material is too high, processing time may increase and production yield may decrease, thereby reducing productivity. Moreover, the improvement in electrochemical performance of the battery may be minimal compared to the increased processing cost required to enhance the tap density, resulting in decreased economic efficiency.

The specific surface area of the negative electrode active material may be 2.35 $m^2$/g or less, and more specifically, may be 2.25 $m^2$/g or 2.15 $m^2$/g or less, and may be 1.5, 1.6, or 1.7 $m^2$/g or more.

If the specific surface area of the negative electrode active material is too large, although it may contribute to enhanced adhesion strength of the electrode, it may also increase the amount of solid electrolyte interphase (SEI) formed on the surface of the negative electrode active material in the future, thereby causing side reactions and reducing battery lifespan. On the other hand, if the specific surface area is too small, it may indicate that the degree of spheroidization of the natural graphite is low due to insufficient spheroidizing treatment. As a result, the graphite may be rolled at a low packing density, leading to a reduced contact area between the negative electrode active material particles and the current collector, thereby degrading the adhesion strength and the aforementioned rate of change ratio.

The above-described sphericity of the natural graphite and active material, the area ratio of orientation peak intensities ($I_{110}/I_{004}$) in the XRD pattern of the active material, the tap density, the specific surface area, and other characteristics may be readily obtained by performing a primary spheroidization and a secondary re-spheroidization process on plate-shaped natural graphite particles. In other words, the natural graphite may be re-spheroidized natural graphite obtained through a primary spheroidization process and a secondary re-spheroidization process.

More specifically, the method for preparing the re-spheroidized natural graphite may comprise: preparing natural graphite particles; performing primary spheroidization on the natural graphite particles; performing secondary re-spheroidization on the primary spheroidized natural graphite particles; and classifying the re-spheroidized natural graphite particles to obtain re-spheroidized natural graphite.

The primary spheroidization step may involve performing a conventional spheroidizing process on plate-shaped (or flake-shaped) natural graphite particles, as commonly known in the art.

The secondary re-spheroidization step may involve additionally spheroidizing the primary spheroidized natural graphite particles using a mechanical spheroidizing method.

The mechanical spheroidizing method may include one or more selected from the group consisting of air classifying milling, spheronizing milling, grinding milling, mechanofusion milling, planetary milling, hybridization milling, shape milling, and high-speed milling.

The secondary re-spheroidization step may be performed at a rotation speed ranging from 500 to 4000 rpm, and more specifically, from 700 to 2000 rpm or from 800 to 1500 rpm. Performing spheroidization within this range of rotation speed can minimize cracking and breakage of the graphite raw material and can form natural graphite with an appropriate degree of sphericity.

The secondary re-spheroidization step may be performed for a period of 5 to 40 minutes, and more specifically, for 8 to 25 minutes or 10 to 20 minutes. Performing spheroidization within this time range can also result in natural graphite with an appropriate degree of sphericity.

The step of classifying the secondary re-spheroidized natural graphite particles to obtain re-spheroidized natural graphite may involve classifying the particles such that the average particle diameter ($D_{50}$) of the re-spheroidized natural graphite falls within a range of 8 to 20 $\mu$m, 10 to 18 $\mu$m, or 13 to 18 $\mu$m. In this classification step, particles smaller than 8 $\mu$m may be partially removed by air classification, and particles larger than 20 $\mu$m may be partially removed by sieving classification.

The negative electrode active material according to the present invention comprises natural graphite and a coating layer disposed on a surface of the natural graphite.

The coating layer may include a low-crystalline carbon material. By forming the low-crystalline carbon material coating layer, side reactions between the natural graphite and the electrolyte can be suppressed, thereby reducing irreversible reactions and improving electrochemical performance.

The low-crystalline carbon material may be, for example, petroleum-based pitch, coal-based pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof, but is not limited thereto.

The content of the coating layer may be from 1 wt% to 20 wt% based on the total weight of the natural graphite, and more specifically, may be from 2 wt% to 16 wt%, from 3 wt% to 12 wt%, or from 4 wt% to 10 wt%. When the content of the coating layer satisfies the above range, the coating layer can effectively bind to the natural graphite, and the output and lifespan characteristics of the lithium secondary battery can be improved by reducing side reactions and enhancing lithium ion conductivity.

The thickness of the coating layer may be from 5 nm to 20 nm. If the coating layer is too thin, it may reduce resistance during lithium ion insertion/extraction into/from the graphite, but may result in poor coating uniformity and an increase in side reactions due to non-uniform coating. On the other hand, if the coating layer is too thick, lithium ion insertion and extraction may become difficult, leading to increased negative electrode resistance and reduced cycle life.

According to another embodiment of the present invention, a method for preparing a negative electrode active material for a lithium secondary battery is provided, the method comprising: preparing natural graphite; mixing the natural graphite with a coating precursor material to form a mixture; and heat-treating the mixture to form a negative electrode active material for a lithium secondary battery.

Hereinafter, the method for preparing the negative electrode active material for a lithium secondary battery according to another embodiment of the present invention will be described in detail by process steps.

First, natural graphite is prepared.

A detailed description of the sphericity and other physical properties of the natural graphite is omitted, as they are described above.

As described above, the natural graphite may be re-spheroidized natural graphite obtained through a primary spheroidization process and a secondary re-spheroidization process. A detailed description of the secondary re-spheroidization process is also omitted for brevity.

Next, the natural graphite is mixed with a coating precursor material to form a mixture. The coating precursor material may be a low-crystalline carbon material. The advantages of including a low-crystalline carbon material in the coating layer have been described above and will not be repeated here.

The low-crystalline carbon material may be selected from petroleum-based pitch, coal-based pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

The mixing may be carried out using a mechanical mixing method.

The mechanical mixing method may include one or more selected from the group consisting of ball milling, mechanofusion milling, shaker milling, planetary milling, attritor milling, shape milling, nauta milling, nobilta milling, high-speed mixing, paddle mixing, ribbon mixing, henschel mixing, corn type mixing, thinky mixing, and homo mixing.

The mixing may be performed at a rotation speed of 500 to 3000 rpm, and more specifically, from 1000 to 3000 rpm, or from 1500 to 2500 rpm.

The mixing may be performed for 2 minutes to 1 hour, and more specifically, for 2 to 30 minutes, or 5 to 20 minutes.

Next, the mixture is heat-treated to form a negative electrode active material for a lithium secondary battery.

The heat treatment may be performed at a temperature of 600°C to 1500°C, and more specifically, from 700°C to 1400°C, from 800°C to 1400°C, or from 900°C to 1400°C.

The heat treatment may be performed under an atmosphere of hydrogen, nitrogen, argon, or a mixed gas thereof.

The heat treatment may be carried out for 2 to 15 hours, and more specifically, for 3 to 10 hours, or 4 to 8 hours.

Hereinafter, the remaining components of the negative electrode for a lithium secondary battery according to one embodiment of the present invention will be described in further detail.

The negative electrode for a lithium secondary battery according to one embodiment of the present invention may comprise: a negative electrode current collector; and a negative electrode active material layer positioned on the negative electrode current collector and comprising the aforementioned negative electrode active material for a lithium secondary battery.

The negative electrode current collector is not particularly limited as long as it has high electrical conductivity without causing chemical changes in the battery. Examples thereof include copper, stainless steel, aluminum, nickel, titanium, sintered carbon, copper or stainless steel surface-treated with carbon, nickel, titanium, or silver, or aluminum-cadmium alloys. The current collector may typically have a thickness in the range of 3 to 500 $\mu$m. Similar to the positive electrode current collector, fine surface irregularities may be formed on the surface of the current collector to improve the binding strength with the negative electrode active material. It may be used in various forms such as films, sheets, foils, nets, porous bodies, foams, or non-woven fabrics.

The negative electrode active material layer may optionally include a binder and/or a conductive material in addition to the negative electrode active material.

The binder serves to improve the adhesion between the negative electrode active material particles, and between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM) rubber, sulfonated EPDM, styrene-butadiene rubber (SBR), fluororubber, or various copolymers thereof. One or more of these binders may be used alone or in combination. The binder may be included in an amount of 1 to 30 wt% based on the total weight of the negative electrode active material layer.

The conductive material is used to impart conductivity to the electrode and is not particularly limited as long as it has electronic conductivity and does not cause chemical changes in the battery. Specific examples include graphite such as natural graphite or artificial graphite; carbon-based materials such as carbon black, acetylene black, ketjen black, channel black, furnace black, lamp black, thermal black, or carbon fibers; metal powders or fibers such as copper, nickel, aluminum, or silver; conductive whiskers such as zinc oxide or potassium titanate; conductive metal oxides such as titanium oxide; or conductive polymers such as polyphenylene derivatives. One or more of these materials may be used alone or in combination. The conductive material may be included in an amount of 1 to 30 wt% based on the total weight of the negative electrode active material layer.

Except for the use of the above-described negative electrode active material, the negative electrode for a lithium secondary battery according to one embodiment of the present invention may be manufactured by a conventional method for preparing a negative electrode.

Specifically, the negative electrode may be manufactured by applying a composition for forming the negative electrode active material layer-comprising the above-described negative electrode active material and optionally a binder, conductive material, and solvent-onto the negative electrode current collector, followed by rolling and drying. The types and contents of the negative electrode active material, binder, and conductive material may be as described above.

The solvent may be one that is commonly used in the relevant technical field. Examples include dimethyl sulfoxide (DMSO), isopropyl alcohol, N-methylpyrrolidone (NMP), acetone, or water, and one or more of these may be used alone or in combination. The amount of the solvent should be sufficient to dissolve or disperse the negative electrode active material, conductive material, and binder, taking into consideration the coating thickness of the slurry and manufacturing yield, and to provide a viscosity suitable for achieving uniform coating thickness during electrode fabrication.

Alternatively, the negative electrode may be manufactured by casting the composition for forming the negative electrode active material layer onto a separate support, then laminating a film obtained by peeling the layer from the support onto the negative electrode current collector.

### 2. Lithium Secondary Battery

Another embodiment of the present invention provides a lithium secondary battery comprising the above-described negative electrode for a lithium secondary battery.

More specifically, the lithium secondary battery may include a positive electrode, a negative electrode positioned opposite the positive electrode, a separator interposed between the positive electrode and the negative electrode, and an electrolyte.

The negative electrode may be as described above.

In addition, the lithium secondary battery may optionally further include a battery container housing an electrode assembly including the positive electrode, negative electrode, and separator, and a sealing member for sealing the battery container.

The positive electrode may include a positive electrode current collector and a positive electrode active material layer disposed on the positive electrode current collector, and the positive electrode active material layer may include a positive electrode active material.

The positive electrode current collector is not particularly limited as long as it possesses conductivity without causing chemical changes in the battery. Examples thereof include stainless steel, aluminum, nickel, titanium, sintered carbon, or aluminum or stainless steel surface-treated with carbon, nickel, titanium, or silver. The current collector may typically have a thickness of 3 to 500 $\mu$m, and fine irregularities may be formed on its surface to enhance the adhesion of the positive electrode active material. It may be used in various forms such as films, sheets, foils, nets, porous bodies, foams, or non-woven fabrics.

The positive electrode active material may be a lithiated intercalation compound capable of reversibly intercalating and deintercalating lithium. Specifically, one or more composite oxides of lithium and a metal selected from cobalt, manganese, nickel, and combinations thereof may be used. Examples include compounds represented by any one of the following chemical formulas:

$Li_aA_{1-b}B_bD_2$ $(0.90 \leq a \leq 1.8$, and $0 \leq b \leq 0.5)$; $Li_aE_{1-b}B_bO_{2-c}D_c$ $(0.90 \leq a \leq 1.8, 0 \leq b \leq 0.5, 0 \leq c \leq 0.05)$; $LiE_{2-b}B_bO_{4-c}D_c$ $(0 \leq b \leq 0.5, 0 \leq c \leq 0.05)$; $Li_aNi_{1-b-c}Co_bB_cD_\alpha$ $(0.90 \leq a \leq 1.8, 0 \leq b \leq 0.5, 0 \leq c \leq 0.05, 0 \leq \alpha \leq 2)$; $Li_aNi_{1-b-c}Co_bB_cO_{2-\alpha}T_\alpha$ $(0.90 \leq a \leq 1.8, 0 \leq b \leq 0.5, 0 \leq c \leq 0.05, 0 \leq \alpha < 2)$; $Li_aNi_{1-b-c}Co_bB_cO_{2-\alpha}T_2$ $(0.90 \leq a \leq 1.8, 0 \leq b \leq 0.5, 0 \leq c \leq 0.05, 0 < \alpha < 2)$; $Li_aNi_{1-b-c}Mn_bB_cD_\alpha$ $(0.90 \leq a \leq 1.8, 0 \leq b \leq 0.5, 0 \leq c \leq 0.05, 0 < \alpha \leq 2)$; $Li_aNi_{1-b-c}Mn_bB_cO_{2-\alpha}T_\alpha$ $(0.90 \leq a \leq 1.8, 0 \leq b \leq 0.5, 0 \leq c \leq 0.05, 0 < \alpha \leq 2)$; $Li_aNi_{1-b-c}Mn_bB_cO_{2-\alpha}T_2$ $(0.90 \leq a \leq 1.8, 0 \leq b \leq 0.5, 0 \leq c \leq 0.05, 0 < \alpha < 2)$; $Li_aNi_bE_cG_dO_2$ $(0.90 \leq a \leq 1.8, 0 \leq b \leq 0.9, 0 \leq c \leq 0.5, 0.001 \leq d \leq 0.1)$; $Li_aNi_bCo_cMn_dGeO_2$ $(0.90 \leq a \leq 1.8, 0 \leq b \leq 0.9, 0 \leq c \leq 0.5, 0 \leq d \leq 0.5, 0.001 \leq e \leq 0.1)$; $Li_aNiG_bO_2$ $(0.90 \leq a \leq 1.8, 0.001 \leq b \leq 0.1)$; $Li_aCoG_bO_2$ $(0.90 \leq a \leq 1.8, 0.001 \leq b \leq 0.1)$; $Li_aMnG_bO_2$ $(0.90 \leq a \leq 1.8, 0.001 \leq b \leq 0.1)$; $Li_aMn_2G_bO_4$ $(0.90 \leq a \leq 1.8, 0.001 \leq b \leq 0.1)$; $QO_2$; $QS_2$; $LiQS_2$; $V_2O_5$; $LiV_2O_5$; $LiIO_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and, $LiFePO_4$.

In the above chemical formulas:

A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Of course, the above compound may include a coating layer on its surface, or a mixture of such a compound with a coated compound may be used.

The coating layer may include at least one coating element compound selected from the group consisting of an oxide, hydroxide, oxyhydroxide, oxycarbonate, and hydroxycarbonate of a coating element. These compounds may be amorphous or crystalline. The coating element may include Mg, Al, Co, K, Na, Ca, Si, Ti, V, Sn, Ge, Ga, B, As, Zr, or a combination thereof. The coating process may be carried out using any method that does not adversely affect the properties of the positive electrode active material, such as spray coating or dipping. Since such methods are well understood by those skilled in the art, a detailed description is omitted.

The positive electrode active material layer may further include a binder and/or a conductive material in addition to the positive electrode active material described above.

The binder serves to improve adhesion between the particles of the positive electrode active material and between the positive electrode active material and the current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM) rubber, sulfonated EPDM, styrene-butadiene rubber (SBR), fluororubber, and various copolymers thereof. One or more of these may be used alone or in combination. The binder may be included in an amount of 1 to 30 wt% based on the total weight of the positive electrode active material layer.

The conductive material is used to impart conductivity to the electrode and is not particularly limited as long as it has electronic conductivity without causing chemical reactions in the battery. Specific examples include graphite (natural or artificial); carbon-based materials such as carbon black, acetylene black, ketjen black, channel black, furnace black, lamp black, thermal black, or carbon fibers; metal powders or fibers such as copper, nickel, aluminum, or silver; conductive whiskers such as zinc oxide or potassium titanate; conductive metal oxides such as titanium oxide; and conductive polymers such as polyphenylene derivatives. One or more of these may be used alone or in combination. The conductive material may be included in an amount of 1 to 30 wt% based on the total weight of the positive electrode active material layer.

The positive electrode may be manufactured using a conventional method for fabricating positive electrodes.

Specifically, the positive electrode may be manufactured by applying a composition for forming the positive electrode active material layer-including the positive electrode active material and optionally a binder, conductive material, and solvent-onto the positive electrode current collector, followed by drying and rolling. The types and contents of the positive electrode active material, binder, and conductive material are as described above.

The solvent may be any commonly used solvent in the art, including dimethyl sulfoxide (DMSO), isopropyl alcohol, N-methylpyrrolidone (NMP), acetone, or water. One or more of these may be used alone or in combination. The amount of solvent used should be sufficient to dissolve or disperse the active material, conductive material, and binder, and to provide a slurry viscosity suitable for achieving uniform coating thickness during application.

Alternatively, the positive electrode may be manufactured by casting the composition onto a separate support, followed by peeling off the dried film and laminating it onto the positive electrode current collector.

The separator separates the positive and negative electrodes and provides a passage for lithium ions. Any separator commonly used in lithium secondary batteries may be used without particular limitation, and it is especially preferred that the separator exhibits low resistance to ion movement and excellent electrolyte wettability. Specific examples include porous polymer films made of polyolefins such as polyethylene homopolymer, polypropylene homopolymer, ethylene/butene copolymer, ethylene/hexene copolymer, or ethylene/methacrylate copolymer, or multilayer structures composed of two or more of these. Also usable are porous nonwoven fabrics, such as those made of high-melting-point glass fibers or polyethylene terephthalate fibers. Additionally, ceramic- or polymer-coated separators may be used to ensure heat resistance or mechanical strength, and they may be applied in single- or multi-layer structures.

The electrolyte may be selected from organic liquid electrolytes, inorganic liquid electrolytes, solid polymer electrolytes, gel-type polymer electrolytes, solid inorganic electrolytes, or molten inorganic electrolytes, but is not limited thereto.

Specifically, the organic liquid electrolyte may include an organic solvent and a lithium salt.

The organic solvent is not particularly limited as long as it serves as a medium for transporting ions involved in electrochemical reactions. Specific examples include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitriles such as R-CN (where R is a C2 to C20 linear, branched, or cyclic hydrocarbon, optionally containing an aromatic ring or ether linkage); amides such as dimethylformamide; dioxolanes such as 1,3-dioxolane; and sulfolanes. Among these, a mixture of a cyclic carbonate having high dielectric constant and high ionic conductivity (e.g., EC or PC) and a linear carbonate having low viscosity (e.g., EMC, DMC, or DEC) is more preferred. The cyclic and linear carbonates may be mixed in a volume ratio of about 1:1 to about 1:9.

The lithium salt may be any compound capable of supplying lithium ions used in lithium secondary batteries. Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt is preferably in the range of 0.1 to 2.0 M. Within this range, the electrolyte can exhibit suitable conductivity and viscosity, enabling excellent electrolyte performance and effective lithium ion mobility.

The electrolyte may further include one or more additives for purposes such as improving cycle life, suppressing capacity degradation, or enhancing discharge capacity. Examples include haloalkylene carbonate compounds such as difluoroethylene carbonate, pyridine, triethyl phosphate, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. Such additives may be included in an amount of 0.1 to 5 wt% based on the total weight of the electrolyte.

Hereinafter, embodiments of the present invention will be described in more detail through the following examples. However, the following examples are merely preferred embodiments of the present invention and are not intended to limit the scope of the present invention.

**Example 1**

**(1) Preparation of Spheroidized Natural Graphite**

Primary spheroidized natural graphite particles having an average particle diameter (D50) of 17 $\mu$m were subjected to secondary mechanical spheroidization for 15 minutes at 1000 rpm using a spheronizer. Fine particles and oversized particles were removed through air classification and sieving, thereby preparing high-density re-spheroidized natural graphite particles with an average particle diameter of 15 $\mu$m.

**(2) Preparation of Negative Electrode Active Material**

The re-spheroidized high-density natural graphite particles having an average particle diameter of 16 $\mu$m were used as a host material. Petroleum-based pitch was mixed with the graphite at a weight ratio of 100:7, and the mixture was mechanically blended using a high-speed stirrer at 2000 rpm for 10 minutes to form a uniform mixture. The resulting sample was placed in a container and heat-treated under a nitrogen atmosphere at 1200°C for 5 hours. After heat treatment, the sample was sieved through a 75 $\mu$m mesh to obtain the negative electrode active material.

**(3) Preparation of Negative Electrode**

The obtained negative electrode active material, a conductive material, a binder (styrene-butadiene rubber, SBR), and a thickener (carboxymethyl cellulose, CMC) were mixed at a weight ratio of 96:1:1.5:1.5. The mixture was dispersed in deionized water to form a negative electrode slurry composition. The slurry was coated onto a copper foil current collector, dried, and then rolled to prepare negative electrodes having electrode densities of 1.40±0.05, 1.50±0.05, 1.60±0.05, 1.70±0.05, and 1.80±0.05 g/cm$^3$.

**(4) Fabrication of Lithium Secondary Battery**

A coin-type 2032 half-cell was fabricated using the above negative electrode as a working electrode and lithium metal as a counter electrode. A porous polypropylene film was used as a separator, and the electrolyte was prepared by dissolving 1 M LiPF$_6$ in a mixed solvent of diethyl carbonate (DEC) and ethylene carbonate (EC) at a volume ratio of 7:3.

**Example 2**

A lithium secondary battery was prepared in the same manner as in Example 1, except that the re-spheroidized natural graphite had an average particle diameter (D50) of 16 μm.

**Comparative Example 1**

A lithium secondary battery was prepared in the same manner as in Example 1, except that primary spheroidized natural graphite having an average particle diameter (D50) of 17 μm was used without the secondary spheroidization process.

**Comparative Example 2**

A lithium secondary battery was prepared in the same manner as in Example 1, except that primary spheroidized natural graphite having an average particle diameter (D50) of 16 μm was used without the secondary spheroidization process.

**Experimental Example 1: Evaluation of Physical Properties of Negative Electrode Active Material**

The physical properties of the negative electrode active materials prepared in Examples 1 and 2 and Comparative Examples 1 and 2 were evaluated. The results are shown in Table 1 below. The specific measurement methods are as follows:

**(1) Particle Size Measurement**

The particle size of the active material powder was measured using a laser diffraction method. D10, D50, D90, and Dmax represent the particle diameters corresponding to 10%, 50%, 90%, and 100% of the cumulative volume fraction, respectively. SPAN was calculated using the following equation: SPAN = (D90 - D10) / D50

**(2) Specific Surface Area Measurement**

The specific surface area was measured using the BET method with a surface area and porosity analyzer (Micromeritics, ASAP 2020).

**(3) Tap Density Measurement**

Based on ASTM B527, 10 g of active material powder was placed in a 50 mL container and tapped 3000 cycles at 284 cycles/min to measure the packing density.

**(4) Sphericity Measurement**

The sphericity was evaluated using a flow-type particle analyzer. Sphericity was calculated as the ratio of the perimeter of a circle having the same projected area as the particle to the actual perimeter of the particle projection. This sphericity was measured using an optical image acquisition analyzer (Fluid Imaging Technologies, FlowCam 8100) and analysis software (Visual Spreadsheet).

**(5) Orientation Peak Intensity Area Ratio (I$_{110}$/I$_{004}$) Measurement**

X-ray diffraction (XRD) was performed on the negative electrode active material powder using Cu Kα radiation. The orientation index was calculated as the area ratio of the (110) peak to the (004) peak of spheroidized natural graphite included in the negative electrode, obtained by integrating the peak intensities. The detailed XRD measurement conditions were as follows:

- Target: Cu Kα radiation, graphite monochromator

- 

$$\text{Slits: divergence slit} = 1°, \text{receiving slit} = 0.1 \text{ mm, scattering slit} = 1°$$

- Measurement ranges and step angles/time:

  ○

  $$(110) \text{ plane: } 2\theta = 76.5° \text{ to } 78.5°, \text{ step} = 0.1°, \text{ time} = 4.2 \text{ s}$$

  ○

  $$(004) \text{ plane: } 2\theta = 53.5° \text{ to } 56.0°, \text{ step} = 0.1°, \text{ time} = 4.2 \text{ s}$$

Here, $2\theta$ represents the diffraction angle.

[Table 1]

| Sample | Particle size | | | | Span | Specific Surface Area (m²/g) | Tap Density (g/cc) | Sphericity | Orientation ratio (I110/I004) |
|---|---|---|---|---|---|---|---|---|---|
| | D10 | D50 | D90 | Dmax | | | | | |
| Example 1 | 10.6 | 17.0 | 26 | 52 | 0.91 | 1.7 | 1.20 | 0.92 | 0.63 |
| Example 2 | 10.5 | 15.8 | 24 | 52 | 0.85 | 2.1 | 1.18 | 0.93 | 0.79 |
| Comp. Ex.1 | 12.2 | 18.7 | 29 | 62 | 0.90 | 2.4 | 1.08 | 0.87 | 0.33 |
| Comp. Ex.2 | 11.2 | 16.5 | 24 | 36 | 0.78 | 2.8 | 1.09 | 0.88 | 0.37 |

Referring to Table 1, it was confirmed that the negative electrode active materials of Examples 1 and 2 exhibited smaller particle diameter (D10) and lower specific surface area, and higher tap density, sphericity, and orientation ratio compared to those of Comparative Examples 1 and 2.

**Experimental Example 2: Evaluation of Negative Electrode Properties**

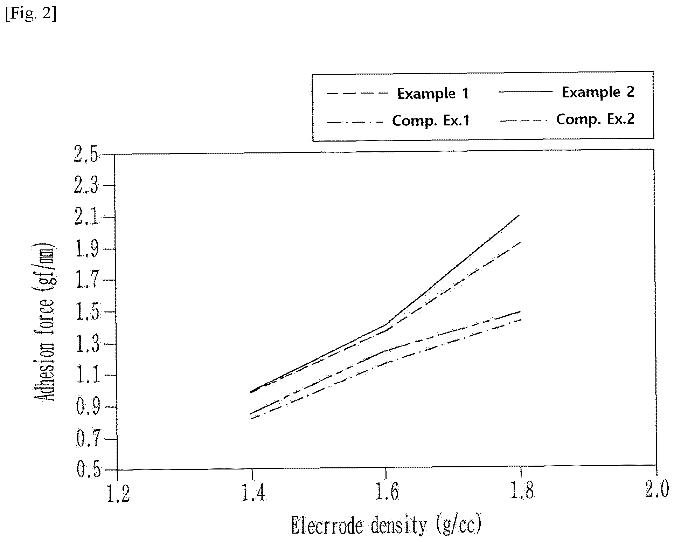

The physical properties of the negative electrodes prepared according to Examples 1 and 2 and Comparative Examples 1 and 2 were evaluated. The results are shown in Table 2 and FIG. 2. The detailed experimental methods are as follows:

**(1) Measurement of Adhesion Strength Between the Current Collector and the Negative Electrode Active Material Layer as a Function of Electrode Density**

The negative electrodes prepared according to Examples 1 and 2 and Comparative Examples 1 and 2 were fabricated with electrode densities of 1.4, 1.5, 1.6, 1.7, and 1.8 g/cc. Adhesion strength was measured for each electrode density.

More specifically, the fabricated negative electrodes were cut into strips having a width of 20 mm and a length of 100 mm. A double-sided adhesive tape (18 mm × 80 mm) was applied to a glass slide (25 mm × 100 mm). The electrode strip was placed on the tape and lightly pressed 10 times with a hand roller. The sample was then mounted on a universal testing machine (UTM) equipped with a 1 kgf load cell, and the current collector was peeled off at a 90° angle at a speed of 300 mm/min to measure the peel strength. The results are presented in Table 2 and FIG. 2.

**(2) Evaluation of Rate of Change Ratio**

Using the adhesion strength measurement results, the rate of change ratio was calculated, i.e., the ratio of the change in adhesion strength (gf/mm) between the current collector and the negative electrode active material layer to the change in electrode density (g/cc), in the range of 1.4 to 1.8 g/cc.

Specifically, the following equation was used:

(Adhesion strength at 1.8 g/cc - Adhesion strength at 1.4 g/cc) [gf/mm] divided by (1.8 - 1.4) [g/cc]

**(3) Evaluation of Adhesion Strength per Unit Electrode Density**

The adhesion strength (gf/mm) was divided by the corresponding electrode density (g/cc) to evaluate the ratio of adhesion strength to electrode density.

**(4) Evaluation of Orientation Ratio**

XRD analysis using Cu Kα radiation was performed on the negative electrode having an electrode density of 1.6 g/cc. The orientation index was calculated as the area ratio of the (110) plane to the (004) plane by integrating the XRD peak intensities of spheroidized natural graphite in the electrode.

The detailed XRD measurement conditions were as follows:

- Target: Cu Kα radiation with graphite monochromator

- Slits: divergence slit = 1°, receiving slit = 0.1 mm, scattering slit = 1°

- Measurement range and step size / dwell time:

$$(110) \text{ plane: } 2\theta = 76.5° \text{ to } 78.5°, \text{ step} = 0.1°, \text{ time} = 4.2 \text{ s}$$

$$(004) \text{ plane: } 2\theta = 53.5° \text{ to } 56.0°, \text{ step} = 0.1°, \text{ time} = 4.2 \text{ s}$$

Here, $2\theta$ refers to the diffraction angle.

[Table 2]

| Negative electrode (g/cc) | Adhesion Strength (gf/mm) | | | | | Rate of Change Ratio | Adhesion Strength / Electrode Density (gf/mm per g/cc) | | | | | Orientation Ratio |
|---|---|---|---|---|---|---|---|---|---|---|---|---|
| | 1.4 | 1.5 | 1.6 | 1.7 | 1.8 | | 1.4 | 1.5 | 1.6 | 1.7 | 1.8 | |
| Example 1 | 0.96 | 1.2 | 1.42 | 1.66 | 1.89 | 2.33 | 0.68 | 0.8 | 0.89 | 0.97 | 1.05 | 0.101 |
| Example 2 | 0.94 | 1.22 | 1.49 | 1.77 | 2.04 | 2.75 | 0.67 | 0.81 | 0.93 | 1.04 | 1.13 | 0.115 |
| Comp. Ex.1 | 0.88 | 1.03 | 1.19 | 1.33 | 1.5 | 1.55 | 0.63 | 0.69 | 0.74 | 0.78 | 0.84 | 0.042 |
| Comp. Ex.2 | 0.83 | 0.98 | 1.13 | 1.29 | 1.44 | 1.53 | 0.59 | 0.66 | 0.71 | 0.76 | 0.8 | 0.050 |

Referring to Table 2, it was confirmed that the negative electrodes of Examples 1 and 2 exhibited higher adhesion strength and higher adhesion strength per unit electrode density at the same electrode density, a greater rate of change ratio, and improved orientation compared to those of Comparative Examples 1 and 2. These results can be interpreted as arising from improvements in sphericity and other physical properties of the negative electrode active material through the re-spheroidization process.

**Experimental Example 3: Evaluation of Charge Output Characteristics of Lithium Secondary Batteries**

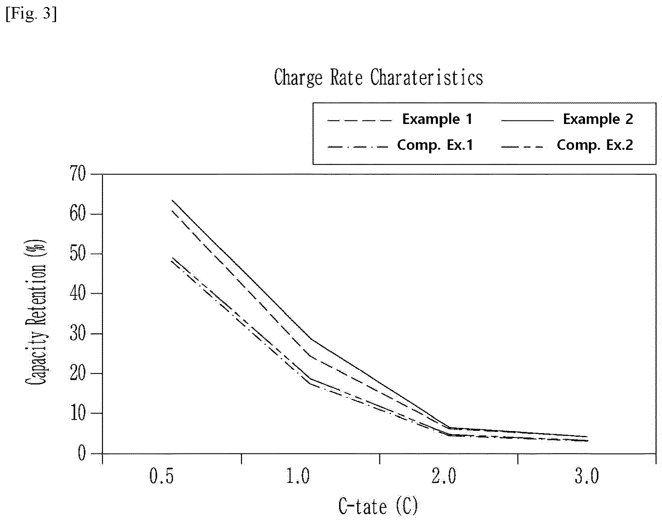

The electrochemical performance of lithium secondary batteries prepared in accordance with Examples 1 and 2 and Comparative Examples 1 and 2 was evaluated. The results are shown in Table 3 and FIG. 3. The specific test method is as follows:

Coin-type lithium secondary batteries were fabricated using the negative electrodes prepared in Examples 1 and 2 and Comparative Examples 1 and 2. Each battery was charged at 25°C using a constant current/constant voltage (CC/CV) method to 5 mV or 0.005C at charge rates of 0.5C, 1.0C, and 2.0C. After charging, the batteries were discharged at a constant current (CC) of 0.1C down to 1.2 V. The charge capacity at each C-rate was measured under constant current conditions.

[Table 3]

| Sample | Charge Output Characteristics | | |
|---|---|---|---|
| | 0.5C(%) | 1.0C(%) | 2.0C(%) |
| Example 1 | 60.9 | 24.3 | 6.3 |
| Example 2 | 63.3 | 28.7 | 6.6 |
| Comp. Ex.1 | 48.1 | 17.5 | 4.6 |
| Comp. Ex.2 | 49.1 | 18.8 | 4.7 |

Referring to Table 3, it was confirmed that the negative electrodes of Examples 1 and 2 exhibited significantly superior charge output characteristics compared to those of Comparative Examples 1 and 2. This improvement is interpreted to result from enhanced physical properties of the negative electrode active material, such as increased sphericity, and the resulting improvements in negative electrode properties including the rate of change ratio and adhesion strength.

In summary, the present invention is characterized by improving the charge output characteristics of a battery by controlling the physical properties of the negative electrode, such as the rate of change ratio and adhesion strength.

Although preferred embodiments of the present invention have been described above, the present invention is not limited thereto and may be variously modified and implemented within the scope of the appended claims, the detailed description of the invention, and the accompanying drawings. Such modifications are also considered to fall within the scope of the present invention.

Accordingly, the true scope of the present invention shall be defined by the appended claims and their equivalents.

**Claims**

1. A negative electrode for a lithium secondary battery, comprising:

    a current collector; and
    a negative electrode active material layer disposed on the current collector,
    wherein the negative electrode active material layer comprises a negative electrode active material,
    wherein the negative electrode active material comprises natural graphite and a coating layer disposed on a surface of the natural graphite,
    wherein, at an electrode density in the range from 1.4 g/cc to 1.8 g/cc, a ratio of a change in adhesion strength (gf/mm) between the current collector and the negative electrode active material layer to a change in electrode density (g/cc) is 2 or more.

2. The negative electrode for a lithium secondary battery of claim 1,

    wherein, at an electrode density in the range from 1.5 g/cc to 1.7 g/cc, the following Equation 1 is satisfied:

    [Equation 1]

    $$\text{Adhesion strength (gf/mm) / Electrode density (g/cc)} \geq 0.80,$$

    wherein the adhesion strength (gf/mm) refers to the adhesion strength between the current collector and the negative electrode active material layer.

3. The negative electrode for a lithium secondary battery of claim 1,
   wherein, at an electrode density of 1.6 g/cc, the adhesion strength between the current collector and the negative electrode active material layer is 1.35 gf/mm or more.

4. The negative electrode for a lithium secondary battery of claim 1,
   wherein, at an electrode density of 1.6 g/cc, the area ratio of orientation peak intensities ($I_{110}/I_{004}$) in an XRD pattern is 0.085 or more.

5. The negative electrode for a lithium secondary battery of claim 1,
   wherein a sphericity of the negative electrode active material is 0.90 or more.

6. The negative electrode for a lithium secondary battery of claim 1,
   wherein the area ratio of orientation peak intensities ($I_{110}/I_{004}$) in an XRD pattern of the negative electrode active material is 0.5 or more.

7. The negative electrode for a lithium secondary battery of claim 1,
   wherein a tap density of the negative electrode active material is 1.10 g/cc or more.

8. The negative electrode for a lithium secondary battery of claim 1,
   wherein a specific surface area of the negative electrode active material is 2.35 m$^2$/g or less.

9. The negative electrode for a lithium secondary battery of claim 1,
   wherein the natural graphite is re-shaped natural graphite obtained through a primary spheroidization process and a secondary re-spheroidization process.

10. The negative electrode for a lithium secondary battery of claim 1,
    wherein the coating layer comprises low-crystalline carbon material.

11. The negative electrode for a lithium secondary battery of claim 10,
    wherein the low-crystalline carbon material comprises one or more selected from petroleum-based pitch, coal-based pitch, mesophase pitch, heavy oil, light oil, polyvinyl alcohol (PVA), polyvinyl chloride (PVC), sucrose, phenol resin, furan resin, furfuryl alcohol, polyacrylonitrile, cellulose, styrene, polyimide, epoxy resin, glucose, or a combination thereof.

12. The negative electrode for a lithium secondary battery of claim 1,
    wherein a content of the coating layer is from 1 wt% to 20 wt% based on the total weight of the natural graphite.

13. The negative electrode for a lithium secondary battery of claim 1,
    wherein a thickness of the coating layer is from 5 nm to 20 nm.

14. A lithium secondary battery comprising the negative electrode for a lithium secondary battery of claim 1.

[Fig. 1]

**Slurry-coated electrode**  **Dried electrode**

[Fig. 2]

[Fig. 3]

Charge Rate Charateristics

## INTERNATIONAL SEARCH REPORT

| International application No. |
| --- |
| **PCT/KR2023/017374** |

### A. CLASSIFICATION OF SUBJECT MATTER

**H01M 4/133**(2010.01)i; **H01M 4/36**(2006.01)i; **H01M 4/587**(2010.01)i; **H01M 10/052**(2010.01)i; **C01B 32/20**(2017.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); C01B 32/05(2017.01); C01B 32/21(2017.01); C01B 32/22(2017.01); H01M 10/0525(2010.01); H01M 4/36(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(negative electrode active material), 재구형화 천연 흑연(re-spherized natural graphite), 저결정성 탄소재 코팅(low crystalline carbon material coating), 리튬 이차 전지(lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2021-0115461 A (POSCO CHEMICAL CO., LTD.) 27 September 2021 (2021-09-27) See paragraphs [0014], [0035], [0087], [0088], [0094], [0101], [0103], [0108] and [0115]. | 1-14 |
| A | KR 10-2020-0028637 A (SAMSUNG SDI CO., LTD.) 17 March 2020 (2020-03-17) See entire document. | 1-14 |
| A | KR 10-2022-0144097 A (SK ON CO., LTD.) 26 October 2022 (2022-10-26) See entire document. | 1-14 |
| A | KR 10-2022-0053610 A (BTR NEW MATERIAL GROUP CO., LTD.) 29 April 2022 (2022-04-29) See entire document. | 1-14 |
| A | CN 115207303 A (XINJIANG TIANHONGJI TECHNOLOGY CO., LTD.) 18 October 2022 (2022-10-18) See entire document. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 February 2024** | **07 February 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017374**

| Patent document cited in search report | | | Publication date (day/month/year) | Patent family member(s) | | | Publication date (day/month/year) |
|---|---|---|---|---|---|---|---|
| KR | 10-2021-0115461 | A | 27 September 2021 | KR | 10-2413434 | B1 | 24 June 2022 |
| KR | 10-2020-0028637 | A | 17 March 2020 | CN | 110885083 | A | 17 March 2020 |
| | | | | CN | 110885083 | B | 17 January 2023 |
| | | | | EP | 3621132 | A1 | 11 March 2020 |
| | | | | EP | 3621132 | B1 | 25 October 2023 |
| | | | | JP | 2020-043069 | A | 19 March 2020 |
| | | | | JP | 2021-193673 | A | 23 December 2021 |
| | | | | JP | 2023-145715 | A | 11 October 2023 |
| | | | | JP | 7094253 | B2 | 01 July 2022 |
| | | | | KR | 10-2323423 | B1 | 05 November 2021 |
| | | | | US | 11276859 | B2 | 15 March 2022 |
| | | | | US | 2020-0083536 | A1 | 12 March 2020 |
| KR | 10-2022-0144097 | A | 26 October 2022 | US | 2022-0336810 | A1 | 20 October 2022 |
| KR | 10-2022-0053610 | A | 29 April 2022 | JP | 2022-033689 | A | 02 March 2022 |
| | | | | JP | 2022-551407 | A | 09 December 2022 |
| | | | | JP | 7366078 | B2 | 20 October 2023 |
| | | | | KR | 10-2022-0033967 | A | 17 March 2022 |
| | | | | KR | 10-2585797 | B1 | 10 October 2023 |
| | | | | US | 11599710 | B2 | 07 March 2023 |
| | | | | US | 2021-0216701 | A1 | 15 July 2021 |
| | | | | US | 2022-0076967 | A1 | 10 March 2022 |
| | | | | US | 2022-0393171 | A1 | 08 December 2022 |
| | | | | WO | 2022-052449 | A1 | 17 March 2022 |
| CN | 115207303 | A | 18 October 2022 | None | | | |

Form PCT/ISA/210 (patent family annex) (July 2022)